# EUROPÄISCHE PATENTSCHRIFT

(11) **EP 2 598 279 B1**
(45) Veröffentlichungstag und Bekanntmachung des Hinweises auf die Patenterteilung: **17.01.2018**
(21) Anmeldenummer: 11787571.6
(22) Anmeldetag: 11.06.2011
(51) Int. Cl.: B23Q 3/00, B23Q 17/00, B23P 11/00, B23P 15/00, F16H 53/02, F01L 1/047

(54) **VERFAHREN ZUR FERTIGUNG EINER NOCKENWELLE**
METHOD FOR PRODUCING A CAMSHAFT
PROCÉDÉ DE FABRICATION D'UN ARBRE À CAMES

(30) Priorität: 29.07.2010 DE 102010032746
(43) Veröffentlichungstag der Anmeldung: 05.06.2013
(73) Patentinhaber: Neumayer Tekfor Engineering GmbH, 77756 Hausach (DE)
(72) Erfinder: BECHTOLD, Matthias, 77716 Haslach (DE)
(86) Internationale Anmeldenummer: PCT/DE2011/001207
(87) Internationale Veröffentlichungsnummer: WO 2012/013175

(56) Entgegenhaltungen:
- EP-A1- 0 282 166
- DE-A1-102007 056 638
- DE-A1-102008 064 194
- DE-B3-102004 060 807
- JP-A- 8 110 275

## Beschreibung

Die Erfindung bezieht sich auf ein Verfahren zur Fertigung einer Nockenwelle, wobei die Nockenwelle ein Trägerelement und mehrere Funktionselemente mit jeweils einer Aussparung aufweist. Dabei werden die Funktionselemente in mehrere Haltelemente eingebracht und dort im Wesentlichen zumindest in einer Fügerichtung unbeweglich gehalten wobei die Halteelemente jeweils ein Funktionselement aufnehmen, und das Trägerelement wird in Fügerichtung in die Aussparungen der Funktionselemente eingebracht. Weiterhin bezieht sich die Erfindung auf eine Haltevorrichtung für die Fertigung einer Nockenwelle gemäß dem erfindungsgemäßen Verfahren. Die Haltevorrichtung verfügt über mehrere Halteelemente, in welche Funktionselemente der Nockenwelle einbringbar sind wobei die Halteelemente jeweils ein Funktionselement aufnehmen, und welche die Funktionselemente zumindest in einer Fügerichtung unbeweglich halten.
Im Stand der Technik sind sogenannte gebaute Nockenwellen bekannt, bei welchen die Nocken auf die Trägerwelle aufgebracht werden. Nachteilig an diesem Verfahren ist, dass das Fertigungsverfahren je nach Anzahl der Nocken bzw. der anderen Funktionselemente wie z.B. Lager lange dauern kann.

Die Offenlegungsschrift EP 0 282 166 A1 beschreibt ein gattungsgemäßes Verfahren zur Herstellung einer gebauten Nockenwelle. Dabei werden die Funktionselemente auf der Trägerwelle fixiert, indem eine Kugel durch die hohle Trägerwelle geführt wird.

Ähnliche Anordnungen, bei denen jedoch unterschiedliche Verfahren zur Fixierung der Funktionselemente zur Anwendung kommen, beschreiben die Offenlegungsschriften DE 10 2008 064 194 A1, DE 10 2007 056 638 A1 oder die Patentschrift DE 10 2004 060 807 B3.

Die Druckschrift JP 8 110275 A offenbart eine Anordnung für die Fertigung einer Nockenwelle, in welcher mit zwei Weggebern gemessen werden, um welches Maß eine teilweise gerändelte Trägerwelle einen Nocken beim Einbringen des gerändelten Abschnitts aufweitet.

Der Erfindung liegt die Aufgabe zugrunde, ein Fertigungsverfahren vorzuschlagen, welches eine höhere Taktrate bei der Fertigung von Nockenwellen erlaubt.

Die Aufgabe wird erfindungsgemäß durch ein Verfahren gelöst, dass mindestens eine Kraft gemessen wird, welche das Trägerelement auf mindestens ein Funktionselement während des Einbringens des Trägerelements in die Aussparung des Funktionselements ausübt. Mit dem erfindungsgemäßen Verfahren werden somit mehrere Funktionselemente - z.B. die einzelnen Nocken - gleichzeitig auf das Trägerelement - andere Bezeichnung auch Welle - aufgebracht. Hierfür werden die Funktionselemente festgehalten, so dass die axial richtige Position der Funktionselemente auf der Welle sichergestellt ist. Das Funktionselement wird entweder nach dem Einbringen auf dem Trägerelement befestigt oder durch das Einbringen wird bereits eine Befestigung, z.B. über Presssitz erzeugt. Die Fügerichtung ist dabei im Allgemeinen die Richtung der Längsachse des Trägerelements bzw. der zu fertigenden Nockenwelle. Die Erfindung wird hier anhand einer Nockenwelle erklärt, kann jedoch bei jeder anderen Art von Welle Anwendung finden.

In einer Ausgestaltung werden die Funktionselemente derartig in das mindestens eine Haltelement eingebracht, dass die Aussparungen der Funktionselemente miteinander fluchtend axial hintereinander angeordnet sind. In einer Ausgestaltung ist vorgesehen, dass während des Fügens ein Fügemittel eingebracht wird. In einer weiteren Ausgestaltung wird die Vorrichtung von einem Gehäuse umfasst. In einer Ausgestaltung wird zwischen dem Trägerelement und mindestens einem Funktionselement eine Temperaturdifferenz erzeugt. In einer weiteren Ausgestaltung befinden sich die Funktionselemente und das Trägerelement im Wesentlichen auf der gleichen Temperatur.

Werden die Funktionselemente beispielweise über Presssitz auf der Welle befestigt, so ist es vorteilhaft, wenn gemessen und insbesondere dokumentiert wird, mit welcher Kraft die Welle in die Aussparungen der Funktionselemente eingebracht wird. Zusätzlich wird in einer Ausgestaltung die Kraft gemessen, mit welcher das Trägerelement während der Fertigung bewegt wird.

Eine Ausgestaltung des erfindungsgemäßen Verfahrens beinhaltet, dass mindestens ein Funktionselement mit einer vorgebbaren radialen Orientierung von der Haltevorrichtung gehalten wird. Die Nocken sind üblicherweise mit einer vorgebbaren Orientierung auf der Welle aufgebracht. Um dies zu erreichen, werden in dieser Ausgestaltung die Funktionselemente teilweise unter Beachtung ihrer radialen Orientierung für die Montage gehalten.

Eine Ausgestaltung des erfindungsgemäßen Verfahrens sieht vor, dass das Trägerelement mit einer Bewegung in die Aussparungen der Funktionselemente soweit eingebracht wird, dass die Funktionselemente auf dem Trägerelement in einer vorgebbaren axialen Endposition sind. In dieser Ausgestaltung wird die Welle somit durch alle Aussparungen der Funktionselemente mit einer einzigen Bewegung bzw. einem einzigen Hub so weit eingeschoben, dass die Funktionselemente bereits auf ihren "richtigen Plätzen" sind.

Eine Ausgestaltung des erfindungsgemäßen Verfahrens beinhaltet, dass das Trägerelement mit einer ersten Bewegung in die Aussparungen eines ersten Anteils der Funktionselemente soweit eingebracht wird, dass die Funktionselemente des ersten Anteils auf dem Trägerelement in einer vorgebbaren axialen Endposition sind, und dass das Trägerelement mindestens mit einer zweiten Bewegung in die Aussparungen mindestens eines zweiten Anteils der Funktionselemente soweit eingebracht wird, dass mindestens die Funktionselemente des zweiten Anteils auf dem Trägerelement in einer vorgebbaren axialen Endposition sind. In dieser Ausgestaltung wird das Trägerelement mit zumindest zwei Bewegungen oder Hüben in die Aussparungen der Funktionselemente eingebracht. Hierfür ist es ggf. erforderlich, dass die Abstände zwischen den Funktionselementen in den Halterungen ggf. abweicht von den Abständen auf der gefertigten Welle bzw. dass vor oder während der zweiten Bewegung ein Teil der Funktionselemente nicht mehr gehalten wird, sondern axial frei beweglich ist. Eine Ausgestaltung des erfindungsgemäßen Verfahrens sieht vor, dass vor und/oder während der zweiten Bewegung die Funktionselemente des ersten Anteils aus der axialen Unbeweglichkeit entlassen werden. In dieser Ausgestaltung ist während der Fertigung ein Teil der Funktionselemente bereits auf der passenden axialen Endposition. Damit das Trägerelement weiter in die anderen Funktionselemente eingebracht werden kann, werden die bereits endpositionierten Funktionselemente nicht mehr gehalten, sondern frei gelassen.

Die Erfindung bezieht sich weiterhin auf eine Haltevorrichtung für die Fertigung einer Nockenwelle gemäß einer der Ausgestaltungen des erfindungsgemäßen Verfahrens, welche darin besteht, dass mindestens ein Sensor vorgesehen ist, welcher mindestens eine Kraft misst, welche auf mindestens ein Funktionselement ausgeübt wird. Die Haltevorrichtung ist vorzugsweise in einer Ausgestaltung derartig ausgestaltet, dass in das mindestens eine Halteelement mindestens ein Funktionselement mit einer radialen Orientierung einbringbar ist und dass das mindestens eine Halteelement das mindestens eine Funktionselement im Wesentlichen radial und axial unbeweglich hält. Ein Halteelement nimmt dabei ein Funktionselement oder mehrere oder alle Funktionselemente auf.

Eine Ausgestaltung der Haltevorrichtung beinhaltet, dass die Halteelemente in einem Rahmen angeordnet sind. Die Halteelemente sind somit in einem Rahmen, welcher auch als Träger ausgestaltet sein kann, angeordnet, d.h. auch entsprechend befestigt oder fixiert. Vorzugsweise sind sie dort derartig befestigt, dass sie unterschiedliche Positionen einnehmen können bzw. dass sie ggf. über passende Zentrierflächen miteinander fluchtend angeordnet sind.

Eine Ausgestaltung der Haltevorrichtung beinhaltet, dass zwischen mindestens zwei Halteelementen mindestens ein Abstandselement vorgesehen ist. Alternativ oder ergänzend sind mindestens zwei Halteelemente mit einem Träger im Wesentlichen unbeweglich verbunden.

Dabei handelt es sich bei dem Trägerelement einer nach dem erfindungsgemäßen Verfahren und/oder in der erfindungsgemäßen Haltevorrichtung hergestellten Nockenwelle beispielsweise um eine einteilige oder mehrteilige Welle, welche abschnittsweise unterschiedliche Außendurchmesser aufweist, d.h. welche gestuft ist. Die Stufung kann beispielsweise in einem zunehmenden Außendurchmesser des Trägerelements bei einer gegenläufigen Abnahme der Innendurchmesser der Aussparungen der Funktionselemente bestehen. Beim Einführen durchläuft das in Fügerichtung an Umfang zunehmende Trägerelement somit jeweils enger werdende Aussparungen.

Die Erfindung wird anhand einiger in den Figuren dargestellter Ausführungsbeispiele näher erläutert. Dabei zeigen:
Fig. 1: eine erfindungsgemäße Haltevorrichtung zum Fertigen einer Nockenwelle,
Fig. 2: die Haltevorrichtung zur Fertigung der Fig. 1 mit eingebrachtem Trägerelement, und
Fig. 3 eine alternative Ausgestaltung der Haltevorrichtung.

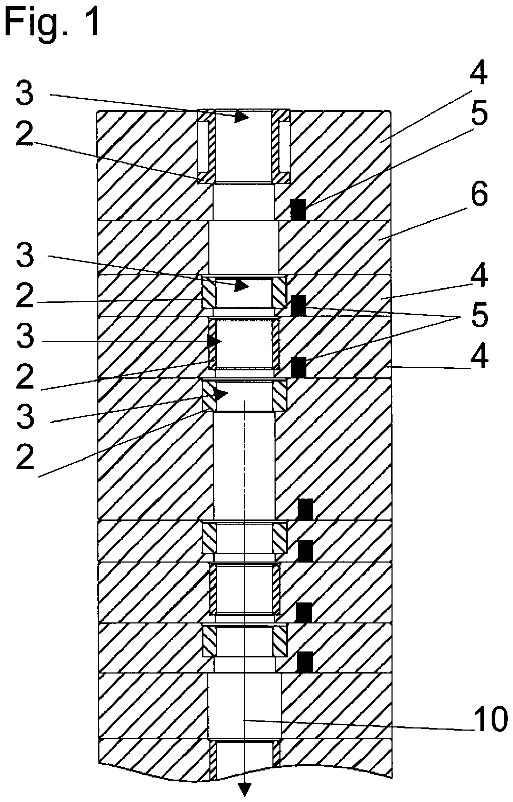

Die Haltevorrichtung der Fig. 1 besteht aus mehreren Halteelementen 4, welche hier direkt hintereinander bzw. untereinander angeordnet sind. Die Halteelemente oder Nester 4 nehmen jeweils ein Funktionselement 2 auf. Bei den Funktionselementen 2 handelt es sich beispielsweise um Axiallager, Nocken, Lagerringe oder Wälzlager. Die Nockenwelle wird hier als ein Beispiel für eine zu fertigende Welle herangezogen. Die Erfindung lässt sich jedoch prinzipiell bei jeder Art von Wellen anwenden. Die Nocken werden dabei vorzugsweise mit einer radialen Orientierung von den entsprechenden Halteelementen 4 gehalten. Einige Halteelemente 4 sind direkt aneinander anstoßend angeordnet, während zwischen anderen ein Abstandselement 6 befindlich ist. In einer alternativen oder ergänzenden Ausgestaltung sind die Halteelemente 4 auf einem Trägerelement befestigt. Die Halteelemente 4 halten die einzelnen Funktionselemente 2 in einer Fügerichtung 10, d.h. sie verhindern eine Bewegung der Funktionselemente 2 in die Fügerichtung 10, stellen sich quasi der Bewegung des Trägerelements entgegen. Um die Fügekraft zu ermitteln, wird die Kraft, welche vom einzubringenden Trägerelement 1 auf die einzelnen Funktionselemente 2 wirkt, durch Sensoren 5 gemessen. Dabei handelt es sich beispielsweise um Kraftaufnehmer unter Verwendung von Federkörpern, Dehnungsmesssteifen oder piezoelektrischen Elementen, welche auf oder in einem Halteelement 4 oder zwischen zwei Halteelementen 4 aufgebracht sein kann.

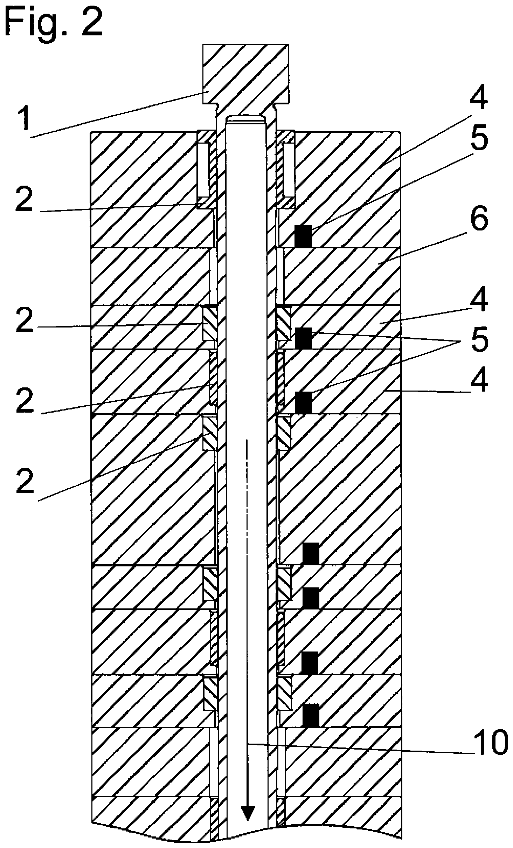

In der Fig. 2 ist die fertige Nockenwelle dargestellt, welche sich durch das Einbringen des Trägerelements 1 in die Aussparungen 3 der Funktionselemente 2 in die Fügerichtung 10 ergibt. Die Befestigung erfolgt hier beispielsweise über Presssitz.

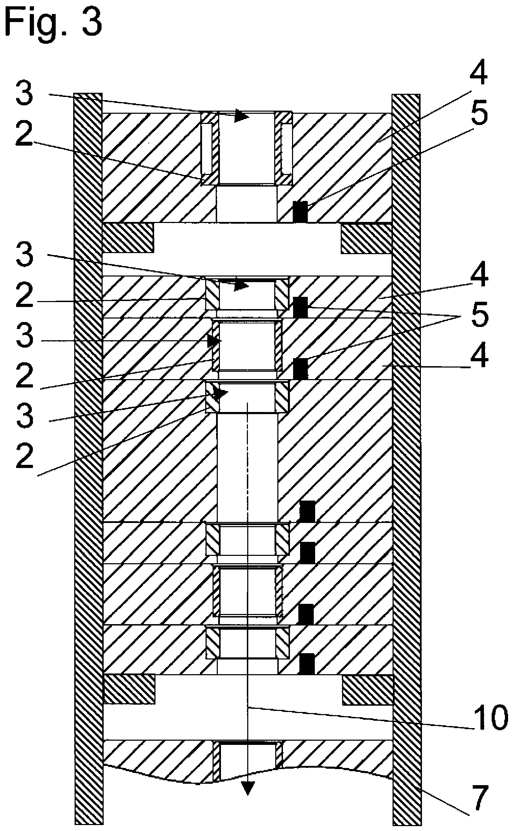

In der Fig. 3 sind die einzelnen Halteelemente 4 in einem Rahmen 7 angeordnet und dort befestigt.

Die Haltevorrichtung und das Verfahren lassen sich prinzipiell bei jeder Art von Wellen, auf denen Funktionselemente aufzubringen sind, anwenden.

## Patentansprüche

1. Verfahren zur Fertigung einer Nockenwelle,
wobei die Nockenwelle ein Trägerelement (1) und mehrere Funktionselemente (2) mit jeweils einer Aussparung (3) aufweist,
wobei die Funktionselemente (2) in mehrere Haltelemente (4) eingebracht und dort im Wesentlichen zumindest in einer Fügerichtung (10) unbeweglich gehalten werden, wobei die Halteelemente jeweils ein Funktionselement aufnehmen, und
wobei das Trägerelement (1) in Fügerichtung (10) in die Aussparungen (3) der Funktionselemente (2) eingebracht wird,
**dadurch gekennzeichnet,**
**dass** mindestens eine Kraft gemessen wird, welche das Trägerelement (1) auf mindestens ein Funktionselement (2) während des Einbringens des Trägerelements (1) in die Aussparung (3) des Funktionselements (2) ausübt.

2. Verfahren nach Anspruch 1,
**dadurch gekennzeichnet,**
**dass** das Trägerelement (1) mit einer Bewegung in die Aussparungen (3) der Funktionselemente (2) soweit eingebracht wird, dass die Funktionselemente (2) auf dem Trägerelement (1) in einer vorgebbaren axialen Endposition sind.

3. Verfahren nach Anspruch 1,
**dadurch gekennzeichnet,**
**dass** das Trägerelement (1) mit einer ersten Bewegung in die Aussparungen (3) eines ersten Anteils der Funktionselemente (2) soweit eingebracht wird,
**dass** die Funktionselemente (2) des ersten Anteils auf dem Trägerelement (1) in einer vorgebbaren axialen Endposition sind, und
**dass** das Trägerelement (1) mindestens mit einer zweiten Bewegung in die Aussparungen (3) mindestens eines zweiten Anteils der Funktionselemente (2) soweit eingebracht wird, dass mindestens die Funktionselemente (2) des zweiten Anteils auf dem Trägerelement (1) in einer vorgebbaren axialen Endposition sind.

4. Haltevorrichtung für die Fertigung einer Nockenwelle gemäß dem Verfahren nach einem der Ansprüche 1 bis 3,
wobei mehrere Halteelemente (4) vorgesehen sind, in welche Funktionselemente (2) der Nockenwelle einbringbar sind wobei die Halteelemente jeweils ein Funktionselement aufnehmen, und welche die Funktionselemente (2) im Wesentlichen zumindest in einer Fügerichtung (10) unbeweglich halten,
**dadurch gekennzeichnet,**
**dass** mindestens ein Sensor (5) vorgesehen ist, welcher mindestens eine Kraft misst, welche auf mindestens ein Funktionselement (2) ausgeübt wird.

5. Haltevorrichtung nach Anspruch 4,
**dadurch gekennzeichnet,**
**dass** die Halteelemente (4) in einem Rahmen (7) angeordnet sind.

6. Haltevorrichtung nach Anspruch 4 oder 5,
**dadurch gekennzeichnet,**
**dass** zwischen mindestens zwei Halteelementen (4) mindestens ein Abstandselement (6) vorgesehen ist.

## Claims

1. Method for the production of a camshaft,
whereby the camshaft has one support element (1) and several functional elements (2) with one recess (3) each,
whereby the functional elements (2) are inserted in several retaining elements (4) and are kept immobile there in general, at least in one fitting direction (10),
whereby the retaining elements each hold a functional element,
and whereby the support element (1) is inserted in the fitting direction (10) in the recesses (3) of the functional elements (2),
**characterized by the fact that**
at least one force is measured, which the support element (1) exerts on at least one functional element (2) during the inserting of the support element (1) in the recess (3) of the functional element (2).

2. Method according to Claim 1,
**characterized by the fact that**
the support element (1) is inserted in the recesses (3) of the functional elements (2) with one movement, so far that the functional elements (2) are in a specified axial end position on the support element (1).

3. Method according to Claim 1,
**characterized by the fact that**
the support element (1) is inserted in the recesses (3) of a first part of the functional elements (2) with a first movement, so far that the functional elements (2) of the first part are in a specified axial end position on the support element (1), and that the support element (1) is at least inserted in the recesses (3) of at least a second part of the functional elements (2) with a second movement, so far that at least the functional elements (2) of the second part are in a specified axial end position on the support element (1).

4. Holding device for the production of a camshaft according to the method according to one of the Claims 1 to 3,
whereby several retaining elements (4) are intended, in which functional elements (2) of the camshaft can be inserted,
whereby the retaining elements each hold a functional element,
and which generally keep the functional elements (2) immobile, at least in one fitting direction (10),
**characterized by the fact that**
at least one sensor (5) is intended, which at least measures one force, which is exerted on at least one functional element (2).

5. Holding device according to Claim 4,
**characterized by the fact that**
the retaining elements (4) are arranged in a frame (7).

6. Holding device according to Claim 4 or 5,
**characterized by the fact that**
at least one distance holder (6) is intended between at least two retaining elements (4).

## Revendications

1. Procédé de fabrication d'un arbre à cames,
l'arbre à cames comportant un élément support (1) et plusieurs éléments fonctionnels (2) avec chacun un évidement (3),
les éléments fonctionnels (2) étant intégrés dans plusieurs éléments de maintien (4) où ils sont maintenus immobiles essentiellement dans tout au moins un sens d'assemblage (10),
les éléments de maintien logeant chacun un élément fonctionnel,
et l'élément support (1) étant intégré, dans le sens d'assemblage (10), dans les évidements (3) des éléments fonctionnels (2),
**caractérisé en ce que**
une force, au moins, que l'élément support (1) exerce sur au moins un élément fonctionnel (2) pendant l'intégration de l'élément support (1) dans l'évidement (3) de l'élément fonctionnel (2), est mesurée.

2. Procédé selon revendication 1,
**caractérisé en ce que**
l'élément support (1) est intégré par un mouvement dans les évidements (3) des éléments fonctionnels (2) jusqu'à ce que les éléments fonctionnels (2) se trouvent dans une position de fin de course axiale prédéfinissable, sur l'élément support (1).

3. Procédé selon revendication 1,
**caractérisé en ce que**
l'élément support (1) est intégré par un premier mouvement dans les évidements (3) d'une première partie des éléments fonctionnels (2) jusqu'à ce que les éléments fonctionnels (2) de la première partie se trouvent dans une position de fin de course axiale prédéfinissable, sur l'élément support (1), et que l'élément support (1) est intégré au moins par un deuxième mouvement, dans les évidements (3) d'au moins une deuxième partie des éléments fonctionnels (2) jusqu'à ce que au moins les éléments fonctionnels (2) de la deuxième partie se trouvent dans une position de fin de course axiale prédéfinissable, sur l'élément support (1).

4. Dispositif de maintien pour la fabrication d'un arbre à cames conformément au procédé selon l'une des revendications 1 à 3,
plusieurs éléments de maintien (4), dans lesquels des éléments fonctionnels (2) de l'arbre à cames peuvent être intégrés, étant prévus,
les éléments de maintien logeant chacun un élément fonctionnel,
et ceux-ci maintenant les éléments fonctionnels (2) immobiles essentiellement dans tout au moins un sens d'assemblage (10),
**caractérisé en ce que**
un capteur (5) au moins, qui mesure au moins une force qui s'exerce sur au moins un élément fonctionnel (2), est prévu.

5. Dispositif de maintien selon revendication 4,
**caractérisé en ce que**
les éléments de maintien (4) sont mis en place dans un cadre (7).

6. Dispositif de maintien selon revendication 4 ou 5,
**caractérisé en ce que**
entre deux éléments de maintien (4) au moins, il est prévu au moins un élément d'écartement (6).
